# EUROPÄISCHE PATENTSCHRIFT

(11) **EP 1 299 691 B1**
(45) Veröffentlichungstag und Bekanntmachung des Hinweises auf die Patenterteilung: **08.12.2004**
(21) Anmeldenummer: 01965126.4
(22) Anmeldetag: 13.07.2001
(51) Int. Cl.: G01B 11/00, G01B 5/012

(54) **VERFAHREN ZUM BERÜHRUNGSLOSEN MESSEN VON GEOMETRIEN VON GEGENSTÄNDEN**
METHOD FOR CARRYING OUT THE NON-CONTACT MEASUREMENT OF GEOMETRIES OF OBJECTS
PROCEDE DE MESURE SANS CONTACT DE LA GEOMETRIE D'OBJETS

(30) Priorität: 13.07.2000 DE 10034242; 04.10.2000 DE 10049303
(43) Veröffentlichungstag der Anmeldung: 09.04.2003
(73) Patentinhaber: Werth Messtechnik GmbH, 35394 Giessen (DE)
(72) Erfinder: CHRISTOPH, Ralf, 35641 Schöffengrund (DE)
(74) Vertreter: Stoffregen, Hans-Herbert, Dr. Dipl.-Phys.
(86) Internationale Anmeldenummer: PCT/EP2001/008088
(87) Internationale Veröffentlichungsnummer: WO 2002/006765

(56) Entgegenhaltungen:
- WO-A-93/18525
- DE-A- 19 724 739
- DE-A- 19 747 027
- DE-A- 19 816 270
- US-A- 5 615 489

## Beschreibung

Die Erfindung bezieht sich auf ein Verfahren zum berührungslosen Messen von Geometrien wie Oberflächen von Gegenständen, mittles eines Laserabstandssensors einer Koordinatenmessmaschine, dessen Laserstrahlenbündel über ein optisches System auf einen Messpunkt des Gegenstandes abgebildet wird, und wobei von dem Messpunkt reflektiertes oder gestreutes Licht von einem Detektor erfasst wird.

Für optoelektronische Abstandsmessungen können zum Beispiel das Laser-Triangulationsprinzip oder das Laser-Autofokusverfahren genutzt werden. Bei Letzterem kann zum Beispiel das Strahlenbündel einer Infrarotlaserdiode von einem Kollimatorobjektiv parallel gerichtet und von einem nachführbaren Abtastobjektiv auf die Oberfläche des Gegenstandes oder Prüflings fokussiert werden. Das von dort reflektierte oder gestreute Licht durchläuft das Abtast- und das Kollimatorobjektiv in umgekehrter Richtung. Ein Strahlenteilerprisma lenkt einen Teil dieses vom Kollimatorobjektiv erneut fokussierten Bündels auf einen Fokusdetektor. Liegt der Fokuspunkt in der Fokusdetektorebene, so fällt er symmetrisch zwischen Fokusdetektorsegmente, so dass beide ein gleiches Signal an die Auswerteelektronik liefern.

Liegt dagegen der Fokuspunkt vor der Fokusdetektorebene, so fällt im Wesentlichen nur auf eines der Fokusdetektorsegmente Licht in Form eines halben unscharfen Zerstreuungskreises. Umgekehrt verlagert sich der Strahlungsschwerpunkt auf das andere Segment, wenn der Fokuspunkt hinter der Fokusdetektorebene liegt. Aus den Signalen der Fokusdetektorsegmente ergibt sich sodann ein Regelsignal zur Nachführung des Abtastobjektivs. Dies kann mittels eines Tauchspulmotors erfolgen, so dass das Abtastobjektiv immer auf die Prüflingsoberfläche fokussiert bleibt. Mit anderen Worten folgt das Objektiv dem Profil des Prüflings. Die Vertikalbewegung wird sodann von einem Wegaufnehmer wie Induktivaufnehmer als Messsignal registriert. Damit unterschiedliche Reflektionsvermögen der Prüflingsoberfläche die Messergebnisse nicht beeinflussen, kann von einem zweiten Detektor eine Intensitätsmessung durchgeführt werden, mit der das Signal des Fokusdetektors normiert wird.

Neben dem zuvor beschriebenen Verfahren der Strahlenbeeinflussung in Detektorrichtung kann auch zum Beispiel das Foucault'sche-Schneidenprinzip zur Anwendung gelangen, nach dem eine Hälfte des optischen Strahlengangs mit Hilfe einer optischen Schneide abgeschattet wird. Je nachdem, ob der Strahl vor oder hinter der Fokusdetektorebene auf das Objekt trifft, wird der linke oder der rechte Teil des reflektierten Messstrahls auf einen Detektor wie Doppelphotodiode abgebildet.

Anstelle einer Schneide kann auch ein Spaltprisma in Verbindung mit zwei Photodiodenpaaren eingesetzt werden. Auch die Möglichkeit der Verwendung einer Zylinderlinse in Verbindung mit einem Photodiodenpaar ist gegeben. Insoweit wird jedoch auf hinlängliche Messverfahren verwiesen.

Die bekannten Abstandsmessverfahren nach dem Autofokusprinzip weisen eine feste Optik auf, wobei zu wählen ist, ob eine hohe Auflösung bei einem geringen Messbereich oder eine geringe Auflösung bei einem größeren Messbereich gewünscht wird. Der Arbeitsabstand selbst ist erkennbar konstant.

Aus der WO 99/53268 (DE 198 16 270 A1) ist ein Verfahren und eine Anordnung zur Erfassung der Geometrie von Gegenständen mittels eines Koordinatenmessgerätes bekannt. Dabei wird ein optisches System mit einer Zoomoptik benutzt, deren Linsengruppen jeweils motorisch in Stellungen für den Abbildungsmaßstab und den Abstand zum Gegenstand separat bewegt werden.

Mit einem entsprechenden Verfahren ist ein großer Einsatzbereich zur Messung der Geometrie von Gegenständen denkbar, wobei mit geringem Aufwand geometrieabhängig erzeugtes Licht erfasst und auf einen Detektor abgebildet wird.

In der DE 26 11 639 A1 ist eine Steuereinrichtung für Objektive mit veränderlichen Brennwerten für kinematographische Zwecke beschrieben.

Die DE 36 13 209 C2 bezieht sich auf eine optische Oberflächenprofil-Messeinrichtung, die mehrere Erfassungssysteme mit Strahlenteilern aufweist.

Ein Verfahren der eingangs genannten Art ist der DE 197 47 027 A1 zu entnehmen. Ein zur Messung benutzter Lasertaster wird dabei sowohl in der X-Y-Ebene als auch in der hierzu vertikal verlaufenden Z-Richtung eines Koordinatenmessgerätes bewegt.

Aus der WO 93/18525 ist eine Vorrichtung zur Oberflächenprüfung nach dem Tastschnittverfahren bekannt. Dabei wird die Auslenkung einer Tastnadel optisch erfasst.

Mit der vorliegenden Erfindung soll durch einfache Maßnahmen der Einsatzbereich der Meßsysteme erweitert werden. Dies wird erreicht durch ein Verfahren mit den Merkmalen des unabhängigen Anspruchs 1.

Gemäß diesem Verfahren können die Linsengruppen jeweils motorisch in Stellungen für Arbeitsabstand bzw. Arbeitsabstand und Auflösung bzw. Messbereich bzw. Arbeitsabstand und Messbereich und Auflösung separat voneinander verstellt werden.

Abweichend vom vorbekannten Laserabstandsmessverfahren besteht die Möglichkeit, aufgrund der getrennt voneinander verstellbaren Linsengruppen der Zoomoptik den Arbeitsabstand zu verändern, wobei auch die Auflösung verbessert und der Messbereich vergrößert werden kann. Demgegenüber ist nach dem Stand der Technik ein Kompromiss zwischen der Güte der Auflösung und der Größe des Messbereichs zu wählen.

Insbesondere sind durch die Erfindung folgende Möglichkeiten der technischen Realisierung gegeben:
- Verstellen des Arbeitsabstandes des Lasers über die Zoomoptik und das Scannen über das Koordinatenmessgerät.
- Verändern des Arbeitsabstandes des Lasers und somit Regelprozess über Zoomoptik direkt.
- Kombination mit Bildverarbeitungsstrahlengang in einen Strahlengang.
- Kompakte Anbaueinheit für Bildverarbeitung und Laser durch Schwenkgelenk.
- Zusätzliche Integration von Hellfeld-Auflicht über Teilerspiegel.
- Einbringung des Laserstrahls in Bildverarbeitungsstrahlengang ohne kompletten Teiler über Farbselektiventeiler oder alternativ über "schmalen Spiegel".
- Einsatz des Lasers zum Messen der dritten Koordinate eines Fasertasters.
- Erzeugung des Eigenleuchtens der Kugel bei einem Fasertaster.

Durch die erfindungsgemäße Lehre wird eine Zoom-Optik mit veränderlichem Arbeitsabstand nicht nur zur Bildung bzw. Erfassung von einem Lichtfleck, Lichtpunkt bzw. Kontrastübergang eingesetzt, sondern die Optik wird gleichzeitig zur Projektion einer Marke, einer Kante, eines Lichtrflecks, insbesondere einer Foucault'schen Schneide eingesetzt. Es ist somit aufgrund der erfindungsgemäßen Lehre möglich, sowohl für die Projektion der für Laserabstandsmessverfahren erforderlichen Laserstrahlen als auch die Abbildung des resultierenden Bildes auf dem Objekt die optischen Parameter Arbeitsabstand, Auflösung, Messbereich und Abbildungsmaßstab gleichzeitig bzw. identisch zu verändern. Aufgrund der erfindungsgemäßen Lehre sind bei unterschiedlichen Arbeitsabständen nicht zwei Optiken erforderlich, wie dies nach dem Stand der Technik notwendig ist, sondern mit der erfindungsgemäßen vorgesehenen Zoom-Optik ist eine Realisierung möglich.

Erfindungsgemäß stehen dem Nutzer unterschiedliche Arbeitsabstände des Lasersensors mit damit verbundenen unterschiedlichen Messbereichen und Genauigkeiten zur Verfügung. Es können somit Betriebsarten für hohe Scanning-Geschwindigkeit bei großem Messbereich und weniger genauen Messergebnissen und langsamer Scanning-Geschwindigkeit bei kleinem Messbereich und hochgenauen Ergebnissen wahlweise genutzt werden.

Im normalen Scanning-Betrieb von messenden Tastern mit Koordinatenmessmaschinen wird der messende Taster entsprechend seines Messsignals durch die mechanische Achse des Koordinatenmessgerätes nachgeregelt. Aufgrund der erfindungsgemäßen Lehre und der hierdurch bedingt hinzugewonnenen Funktionalität des veränderlichen Arbeitsabstandes kann das Scannen von Objekten auch ohne Bewegen der Koordinatenachse erfolgen. So wird in Abhängigkeit von der Auslenkung des Sensors lediglich der Arbeitsabstand verändert. Das Messergebnis wird durch Auslesen des Arbeitsabstandes und in Kombination mit den Ausleseergebnissen der Koordiantenachsen der Koordinatenmessmaschine gewonnen.

Wird ein weiterer Strahlteiler in den Abbildungsstrahlengang eingebracht, besteht die Möglichkeit, die aufgrund der erfindungsgemäßen Lehre schnelle Messung des Abstandes zum Messobjekt mit den Möglichkeiten einer Bildverarbeitung zur Messung der Dimensionen in der Bildebene zu kombinieren. Um gegebenenfalls bedingte Intensitätsverluste im Bildverarbeitungs- bzw. Laserstrahlengang im jeweiligen Arbeitsmodus zu vermeiden, können die Strahlenteiler wie Spiegel mechanisch so ausgeführt werden, dass diese aus dem Strahlengang herausgeschwenkt oder gekippt werden können. Auch besteht die Möglichkeit, durch farbselektive Filter eine Trennung beider Strahlengänge vorzunehmen.

Um des Weiteren die Flexibilität der durch die erfindungsgemäße Lehre eröffneten Messverfahren und Anwendungsmöglichkeiten zu erhöhen, sieht eine Weiterbildung der Erfindung vor, dass die komplette Sensorik am Dreh-/Schwenkgelenk einer Koordinatenmessmaschine angeordnet wird.

Auch besteht die Möglichkeit, das verwendete Laserlicht zum Erzeugen von Eigenleuchten eines Antastelementes eines opto-taktilen Tasters zu verwenden, wie dieser der WO 99/53268 zu entnehmen ist, auf deren Offenbarungsgehalt Bezug genommen wird.

Ferner kann mittels des erfindungsgemäßen Laserabstandssensors die Lage eines opto-taktilen Tasters, wie dieser in der WO 99/53268 beschrieben ist, in Z-Richtung der Koordinatenmessmaschine bestimmt werden.

Auch kann die Arbeitsrichtung des Laserabstandssensors über einen einwechselbaren zusätzlichen Spiegel wahlweise geändert werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von Zeichnung zu entnehmenden bevorzugten Ausführungsbeispiel.

Es zeigen:
- Bild 1: eine Prinzipdarstellung eines Lasersensors zur Messung von Oberflächen von Gegenständen,
- Bild 2: Prinzipdarstellungen von Messbereichen, die mit dem Lasersensor gemäß Bild 1 abdeckbar sind,
- Bild 3a, 3b: abdeckbare Messbereiche eines Lasersensors, der sich für das erfindungsgemäße Verfahren eignet, im Vergleich zu denen eines Lasersensors nach dem Stand der Technik,
- Bild 4: einen Lasersensor gemäß Bild 1 mit zusätzlichem Strahlenteiler,
- Bild 5: ein Dreh-Schwenkgelenk mit Lasersensor,
- Bild 6: ein Dreh-/Schwenkgelenk mit Lasersensor sowie Fasertaster und
- Bild 7: eine Prinzipdarstellung einer Koordinatenmessmaschine.

Erfindungsgemäß wird eine Koordinatenmessmaschine zum berührungslosen Messen von Geometrien von Oberflächen von Gegenständen mittels eines Laserstrahlenbündels vorgeschlagen, der über ein optisches System auf einen Messpunkt des Gegenstandes abgebildet wird und von dem Messpunkt reflektiertes Licht von einem Detektor oder Sensor erfasst wird. Erfindungemäß wird hierzu eine Zoom-Optik mit veränderlichem Arbeitsabstand nicht nur zur Abbildung bzw. Erfassung von einem Lichtfleck, Lichtpunkt bzw. Kontrastübergang verwendet, sondern gleichzeitig wird die Optik zur Projektion einer Marke, einer Kante, eines Lichtflecks und insbesondere einer Foucault'schen Schneide eingesetzt. Somit besteht die Möglichkeit, sowohl für die Projektion der für Laserabstandsmessverfahren erforderlichen Laserstrahlen als auch die Abbildung des resultierenden Bildes auf dem Objekt die optischen Parameter Arbeitsabstand, Auflösung, Messbereich und Abbildungsmaßstab gleichzeitig und identisch zu verändern.

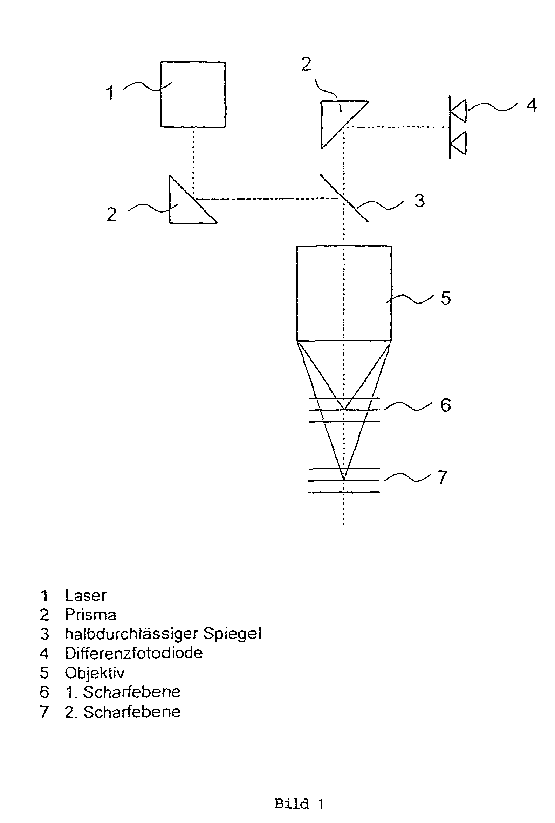

In Bild 1 ist rein prinzipiell ein Laser 1 dargestellt, dessen Strahl über ein Prisma 2 und einen halbdurchlässigen Spiegel 3 einer Zoom-Optik 5 zugeleitet wird, um den Laserstrahl in verschiedenen Scharfebenen 6 und 7 abzubilden. Das reflektierte Licht durchläuft den halbdurchlässigen Spiegel 3, um über ein weiteres Prisma 2 einem Sensor in Form von zum Beispiel einer Differenzfotodiode 5 zuzuleiten.

Wie Bild 1 am Beispiel des Lasersensors nach dem Foucault-Prinzip zeigt, wird die Zoom-Optik sowohl zur Projektion des über einen Spiegel in den Strahlengang gebrachten Bildes der Foucault'schen Schneide als auch zur Abbildung des resultierenden Bildes des Messobjektes auf die optoelektronischen Sensoren 4 benutzt, die erwähntermaßen im Ausführungsbeispiel als Differenzfotodioden ausgebildet sind. Da mittels der Optik 5 Arbeitsabstand und Auflösung und/oder Messbereich separat voneinander verstellbar sind, ist nur eine einzige Optik erforderlich, die nach den Verfahren nach dem Stand der Technik zur Realisierung des Foucault'schen Prinzips mit veränderlichem Arbeitsabstand zwei Optiken erforderlich gemacht hätten.

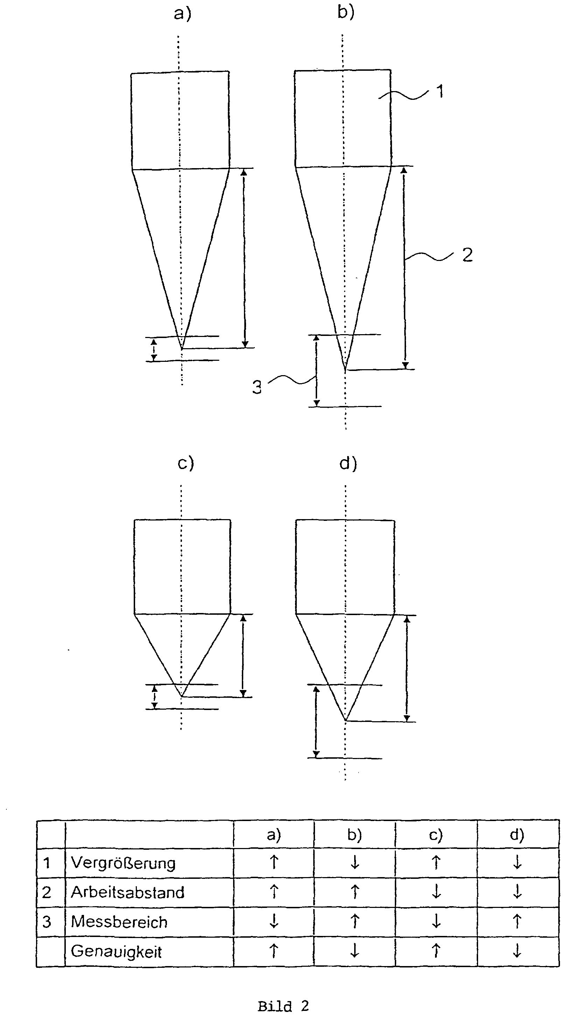

Folglich stehen dem Benutzer unterschiedliche Arbeitsabstände des Lasersensors mit damit verbundenen unterschiedlichen Messbereichen und Genauigkeiten zur Verfügung. Es können somit Betriebsarten wie hohe Scanning-Geschwindigkeiten bei großem Messbereich (Fangbereich) (Bild 2b) und 2d)) und weniger genauen Messergebnissen und langsamen Scanning-Geschwindigkeiten mit kleinerem Messbereich (Bild 2a) und 2c)) und hochgenauen Ergebnissen wahlweise genutzt werden, wie anhand von Bild 2 verdeutlicht wird. In diesem werden mit 1 die Zoom-Optik, mit 2 der Arbeitsabstand und mit 3 der Messbereich prinzipiell angedeutet. In Abhängigkeit von der Vergrößerung, Arbeitsabstand und Messbereich ergeben sich unterschiedliche Genauigkeiten, wie die Tabelle in Bild 2 verdeutlicht, (↑ = groß bzw. größer, ↓ = klein, gering bzw. kleiner, geringer)

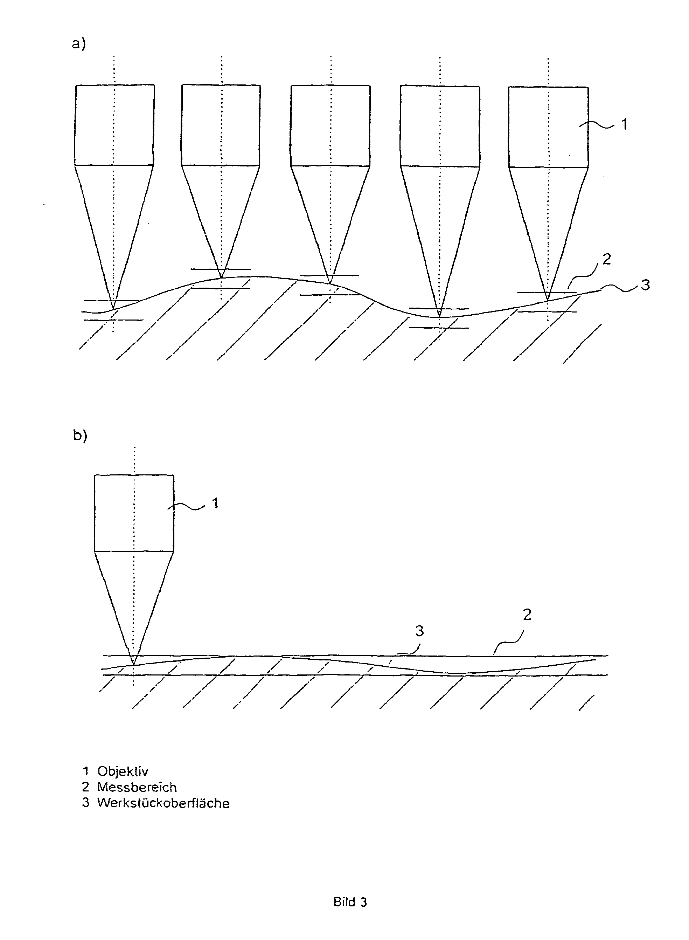

Nach dem Stand der Technik werden im normalen Scanning-Betrieb von messenden Tastern mit Koordinatenmessmaschinen der messende Taster entsprechend eines Messsignals durch die mechanische Achse der Koordinatenmessmaschine nachgeregelt. Durch die erfindungsgemäß hinzugewonnene Funktionalität des veränderlichen Arbeitsabstandes kann das Scannen von Objekten auch ohne Bewegung der Koordinatenachsen erfolgen. Es wird abhängig von der Auslenkung des Sensors lediglich der Arbeitsabstand verändert. Das Messergebnis wird durch Auslesen des Arbeitsabstandes und in Kombination mit den Ausleseergebnissen der Koordinatenmessmaschine gewonnen, wie Bild 3a verdeutlicht. Ohne eine Zoom-Optik ergäbe sich dagegen ein sehr eingeschränkter Messbereich aufgrund des fest vorgegebenen Abstandssensors, wie anhand von Bild 3b erkennbar wird.

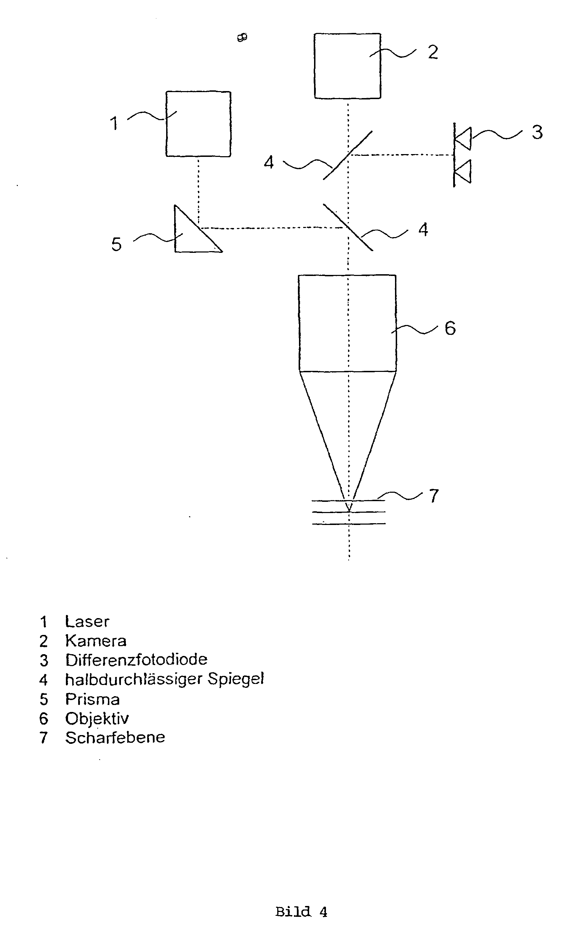

Durch Einbringen eines weiteren Strahlenteilers 4 in den Abbildungsstrahlengang gemäß Bild 4 ist es möglich, die erfindungsgemäße schnelle Messung des Abstandes vom Messobjekt mit den Möglichkeiten einer Bildverarbeitung zur Messung der Dimensionen in der Bildebene zu kombinieren. Um hierdurch bedingte Intensitätsverluste im Bildverarbeitungs- bzw. Laserstrahlengang im jeweiligen Arbeitsmodus zu vermeiden, können die Strahlenteiler wie Spiegel mechanisch so ausgeführt werden, dass diese aus dem Strahlengang herausgeschwenkt oder gekippt werden können. Auch besteht die Möglichkeit, über farbselektive Filter eine Trennung der Strahlengänge zu erreichen.

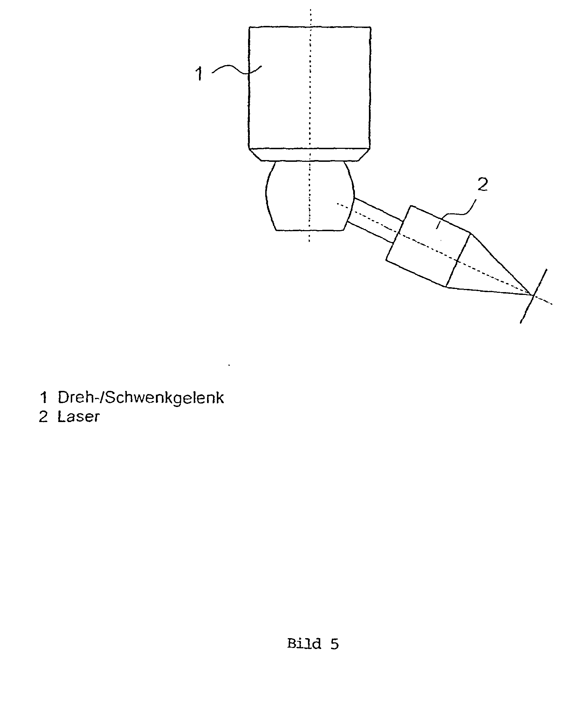

Um die Flexibilität der beschriebenen Lösung zu erhöhen, besteht ferner die Möglichkeit, die gesamte Sensorik am Dreh-/Schwenkgelenk einer Koordinaten-Messmaschine anzuordnen, wie rein prinzipiell durch Bild 5 angedeutet wird.

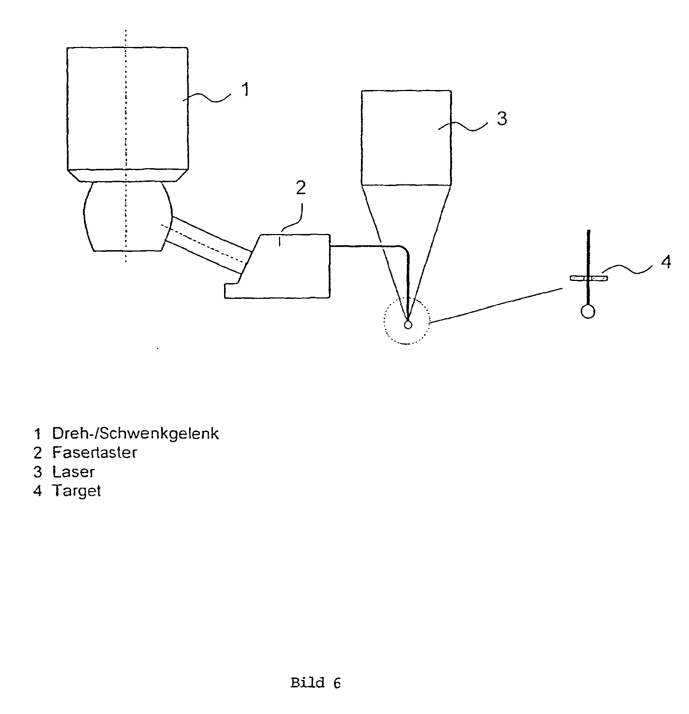

Bild 6 zeigt wiederum rein prinzipiell, dass ein Laserabstandssensor zum Messen der Lage eines mechanischen Tast- bzw. Antastelementes in Richtung der optischen Achse (Z-Richtung der Koordinatenmessmaschine) des Laserabstandssensors eingesetzt werden kann. Als Antastelement ist dabei ein Fasertaster zu bevorzugen, wie dieser in der WO 99/53268 beschrieben wird, auf den in der Gesamtoffenbarung ausdrücklich Bezug genommen wird. Insoweit wird auf die entsprechende Offenbarung verwiesen. In Kombination mit den Messergebnissen eines Bildverarbeitungssystems innerhalb der Abbildungsebene lässt sich somit eine dreidimensionale Bestimmung der Lage des Antastelementes erreichen. Das Antastelement in Form einer Kugel kann hierzu mit einer speziellen Fläche für die Erzeugung des Laserbildes ausgestattet sein.

Der durch das Laserlicht erzeugte Eigenleuchteffekt der Fasertasterkugel kann ebenfalls gleichzeitig zur Detektion ihrer Lage mittels Bildverarbeitungssystem herangezogen werden.

Selbstverständlich ist die Lagebestimmung des Tasters in Z-Richtung, also senkrecht zu der Ebene, in der die Lagebestimmung des Tasters mittels eines optischen Sensors wie Bildverarbeitungssensors, positionsempfindlichen Flächensensors bzw. einer Videokamera auch mit einem konventionellen Laserabstandssensor durchführbar.

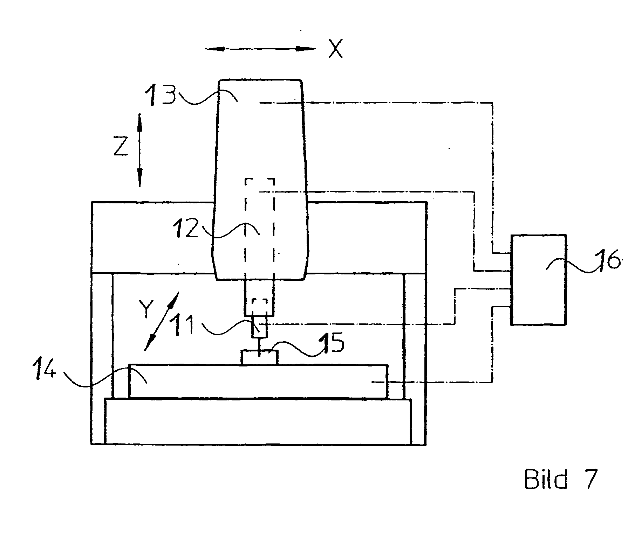

In Bild 7 ist ein Ausführungsbeispiel zur Realisierung des erfindungsgemäßen Verfahrens dargestellt. Der Laserabstandssensor 11 mit verstellbaren Linsengruppen ist an einer Pinole 12 (Z-Achse) eines Koordinatenmessgerätes befestigt. Diese Pinole 12 ist über einen Schieber 13 in x-Richtung verschiebbar. Ein Messobjekt 15 kann in y-Richtung über einen Messtisch 14 ebenfalls verschoben werden. Alle Achsen des dargestellten Koordinatenmessgerätes sind motorisch angetrieben und werden durch ein Steuerungssystem 16 gesteuert. Die Ausgangssignale des Laserabsiandssensors 11 werden in dem Steuerungssystem 16 so verarbeitet, dass der Abstand zwischen Laserabstandssensor 11 und Materialoberfläche immer konstant gehalten wird. Durch Verfahren in einer der Achsen x oder y wird somit ein Scanning-Vorgang über das Messobjekt 15 erzielt. Durch Verstellung der Position der Linsengruppen im Laserabstandssensor 11 kann der Arbeitsabstand des Laserabstands sensors 11 beim Scannen eingestellt werden.

## Patentansprüche

1. Verfahren zum berührungslosen Messen von Geometrien wie Oberflächen von Gegenständen mittels eines Laserabstandssensors einer Koordinaternnessmaschine, dessen Laserstrahlenbündel über ein optisches System auf einen Messpunkt des Gegenstandes abgebildet wird, und wobei von dem Messpunkt reflektiertes oder gestreutes Licht von einem Detektor erfasst wird.
**dadurch gekennzeichnet,**
**dass** das optische System eine Optik mit Linsengruppen umfasst, die zum Einstellen eines gewünschten Arbeitsabstandes des optischen Systems jeweils motorisch separat voneinander verstellt werden.

2. Verfahren nach Anspruch 1,
**dadurch gekennzeichnet,**
**dass** Ausgangssignale des Detektors die Koordinatenmessmaschine im Scanning-Betrieb steuern.

3. Verfahren nach Anspruch 1 oder 2,
**dadurch gekennzeichnet,**
**dass** zur Realisierung des Scanning-Betriebs der Arbeitsabstand des optischen Systems durch Regelvorgang gezielt verändert wird.

4. Verfahren nach zumindest einem der vorhergehenden Ansprüche,
**dadurch gekennzeichnet,**
**dass** aus dem zwischen dem Messpunkt und dem Detektor verlaufenden Abbildungsstrahlengang ein Bildverarbeitungsstrahlengang abgeleitet wird.

5. Verfahren nach zumindest einem der vorhergehenden Ansprüche,
**dadurch gekennzeichnet,**
**dass** Laser, Detektor und/oder optisches System durch eine Schwenkeinrichtung im Raum positioniert wird.

6. Verfahren nach Anspruch 4,
**dadurch gekennzeichnet,**
**dass** als Teilerspiegel zwischen Bildverarbeitungs- und Abbildungsstrahlengang Farbselektiv-Filter verwendet werden.

7. Verfahren nach Anspruch 4,
**dadurch gekennzeichnet,**
**dass** als Teilerspiegel zwischen Bildverarbeitungs- und Abbildungsstrahlengang Kippoder Schwenkspiegel verwendet werden.

8. Verfahren nach zumindest einem der vorhergehenden Ansprüche,
**dadurch gekennzeichnet,**
**dass** mittels des das optische System und den Detektor umfassenden Laserabstandssensors in Z-Achse der Koordinatenmessmaschine der Abstand eines optisch erfassten taktilen Tasters zu dem Detektor ermittelt wird

9. Verfahren nach Anspruch 8,
**dadurch gekennzeichnet,**
**dass** Laserlicht zum Erzeugen von Eigenleuchten des optisch erfassten taktilen Tasters bzw. dessen Tastelementes verwendet wird.

10. Verfahren nach Anspruch 8,
**dadurch gekennzeichnet,**
**dass** die Arbeitsrichtung des Laserabstandssensors über einen einwechselbaren zusätzlichen Spiegel wahlweise veränderbar ist.

11. Verfahren nach zumindest Anspruch 1,
**dadurch gekennzeichnet,**
**dass** das optische System beim Messen des Gegenstandes in einer X-Y-Ebene bei konstantern Z-Achsenwert bewegt wird, wobei die Z-Achse in Richtung Senkrecht zur X-Y-Ebene liegt.

12. Verfahren nach Anspruch 1,
**dadurch gekennzeichnet,**
**dass** die Linsengruppen zum Einstellen von Auflösungen bzw. Messbereich separat voneinander verstellt werden.

## Claims

1. Method for carrying out non-contact measurement of geometries such as surfaces of objects, by means of a laser distance sensor of a coordinate measuring machine, the laser beam of said laser distance sensor that is projected onto a measuring point of the object via an optical system, and wherein light that is reflected or scattered by the measuring point is detected by a detector,
**characterized in**
**that** the optical system comprises an optic having lens groups, which are each motor-adjusted separately from each other for setting a desired working distance of the optical system.

2. Method according to claim 1,
**characterized in**
**that** output signals of the detector control the coordinate measuring machine in the scanning operation.

3. Method according to claim 1 or 2,
**characterized in**
**that** for the realization of the scanning operation the working distance of the optical system is modified purposefully through control process.

4. Method according to at least one of the preceding claims,
**characterized in**
**that** from the image beam path extending between the measuring point and the detector an image processing beam path is deduced.

5. Method according to at least one of the preceding claims,
**characterized in**
**that** laser, detector and/or optical system are positioned in the space through a swivel device.

6. Method according to claim 4,
**characterized in**
**that** color-selective filters are used as splitter mirrors between image processing beam path and image beam path.

7. Method according to claim 4,
**characterized in**
**that** tilt or swivel mirrors are used as splitter mirrors between image processing beam path and image beam path.

8. Method according to at least one of the preceding claims,
**characterized in**
**that** by means of the laser distance sensor comprising the optical system and the detector in Z-axis of the coordinate measuring machine the distance between an optically detected tactile probe and the detector is determined.

9. Method according to claim 8,
**characterized in**
**that** laser light is used for generation of inherent light of the optically detected tactile probe and its feeler element, respectively.

10. Method according to claim 8,
**characterized in**
**that** the working direction of the laser distance sensor can be modified selectively via an exchangeable additional mirror.

11. Method according to at least claim 1,
**characterized in**
**that** while measuring the object the optical system is moved in a X-Y-plane at constant Z-axis value, where the Z-axis is running vertically to the X-Y-plane.

12. Method according to claim 1,
**characterized in**
**that** for adjustment of resolutions and measurment range, respectively, the lens groups are adjusted separately from each other.

## Revendications

1. Procédé de mesure sans contact de géométries telles que des surfaces d'objets au moyen d'un capteur de distance à laser d'une machine de mesure par cordonnées dont le faisceau de rayons laser est formé par un système optique sur un point de mesure de l'objet, selon lequel la lumière réfléchie ou dispersée par le point de mesure est détectée par un détecteur,
**caractérisé en ce que**
le système optique comprend une optique avec des groupes de lentilles réglés par des moteurs séparément les uns des autres, pour ajuster une distance de travail souhaitée du système optique.

2. Procédé selon la revendication 1,
**caractérisé en ce que**
des signaux de sortie du détecteur contrôlent la machine de mesure par coordonnées en mode de scanning.

3. Procédé selon la revendication 1 ou 2,
**caractérisé en ce que**
la réalisation du mode de scanning de la distance de travail du système optique est modifiée de manière ciblée par une opération de réglage.

4. Procédé selon au moins une des revendications précédentes,
**caractérisé en ce que**
un faisceau de traitement d'image est dérivé du faisceau de reproduction entre le point de mesure et le détecteur.

5. Procédé selon au moins une des revendications précédentes,
**caractérisé en ce que**
le laser, le détecteur et/ou le système optique sont positionnés dans l'espace par un dispositif d'inclinaison.

6. Procédé selon la revendication 4,
**caractérisé en ce que**
un filtre de sélection de couleurs est utilisé comme miroir séparateur entre les faisceaux de traitement d'image et de reproduction.

7. Procédé selon la revendication 4,
**caractérisé en ce que**
un miroir basculant ou inclinable est utilisé comme miroir séparateur entre les faisceaux de traitement d'image et de reproduction.

8. Procédé selon au moins une des revendications précédentes,
**caractérisé en ce que**
la distance d'un palpeur tactile par rapport au détecteur est déterminée au moyen du capteur de distance à laser comprenant le système optique et le détecteur dans l'axe Z de la machine de mesure par coordonnées.

9. Procédé selon la revendication 8,
**caractérisé en ce que**
une lumière laser est utilisée pour générer un éclairage propre du palpeur tactile détecté optiquement ou de son élément palpeur.

10. Procédé selon la revendication 8,
**caractérisé en ce que**
la direction de travail du capteur de distance à laser peut être modifiée au choix par un miroir supplémentaire convertible.

11. Procédé selon la revendication 1,
**caractérisé en ce que**
lors de la mesure de l'objet, le système optique est mû dans un plan X-Y avec une valeur d'axe Z constante, l'axe Z étant situé dans une direction perpendiculaire au plan X-Y.

12. Procédé selon la revendication 1,
**caractérisé en ce que**
les groupes de lentilles pour ajuster des définitions ou une plage de mesure sont réglés séparément les uns des autres.
